Europäisches Patentamt

(19) European Patent Office

Office européen des brevets

(11) Publication number: 0 391 543
A2

## (12) EUROPEAN PATENT APPLICATION

(21) Application number: 90302546.8

(22) Date of filing: 09.03.90

(51) Int. Cl.⁵: G06F 13/24

(30) Priority: 06.04.89 US 334134

(43) Date of publication of application:
10.10.90 Bulletin 90/41

(84) Designated Contracting States:
AT BE CH DE DK ES FR GB GR IT LI LU NL SE

(71) Applicant: ADVANCED MICRO DEVICES, INC.
901 Thompson Place P.O. Box 3453
Sunnyvale, CA 94088(US)

(72) Inventor: Grumlose, Dean
78 Shoshone Trail
Austin, Texas 78737(US)
Inventor: Peterson, Joe William
Route 6, Box 51 P
Austin, Texas 78737(US)

(74) Representative: Wright, Hugh Ronald et al
Brookes & Martin 52/54 High Holborn
London WC1V 6SE(GB)

(54) Microprocessor clock.

(57) A microprocessor peripheral simultaneously sends an interrupt and speeds up a clock signal to a microprocessor in a subscriber telephone when a packet of information is received from the central office. The interrupt is serviced with the sped-up clock signal to reduce the response time of the system. This allows the normal clock frequency to be reduced in order to conserve power.

EP 0 391 543 A2

## MICROPROCESSOR CLOCK

This invention concerns a microprocessor clock. As an example it concerns speed of a microprocessor clock. specifically, we will describe a hardware change that increases the speed of a microprocessor clock for high speed servicing of an interrupt by a microprocessor.

Telephones of an Integrated Services Digital Network (ISDN) are connected to switches of a central office. A telephone of such a system includes a microprocessor, a data interface, and an audio interface. The central office supplies the telephone with a very small amount of power, if the telephone operates in the restricted mode, as defined by the CCITT I.430 Recommendation. This recommendation specifies that a terminal device, such as a telephone, can extract a maximum of 380 mW from power supply lines.

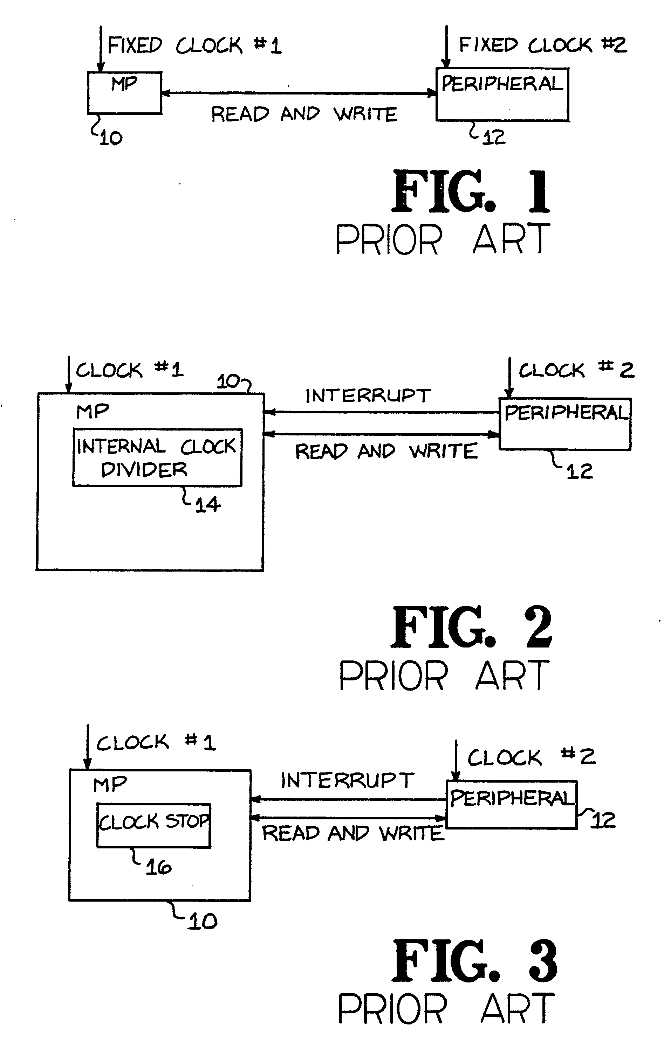

Figure 1 is a schematic diagram illustrating a microprocessor 10 and a peripheral device 12 in a telephone, for example, receiving fixed clock signals. The microprocessor 10 writes and reads data to the peripheral device 12. This approach is simple to implement, however, the microprocessor 10 does not consume less power when it is not busy.

Figure 2 is a schematic diagram illustrating a microprocessor 10 having an internal clock divider 14, and a peripheral device 12 in a telephone, for example. The internal clock divider 14 is reprogrammed by the microprocessor 10 to change the speed of a clock signal. Power consumption is reduced, but the microprocessor 10 uses time in increasing the speed of the clock in response to an interrupt event. This response time, or latency, prevents the programming of a very low clock speed.

Figure 3 is a schematic diagram illustrating a microprocessor 10 having a stopable clock 16, and a peripheral device 12 in a telephone, for example. The microprocessor 10 can be programmed to completely stop the clock signal. Power consumption is reduced, but the microprocessor 10 can do no work because its clock is off.

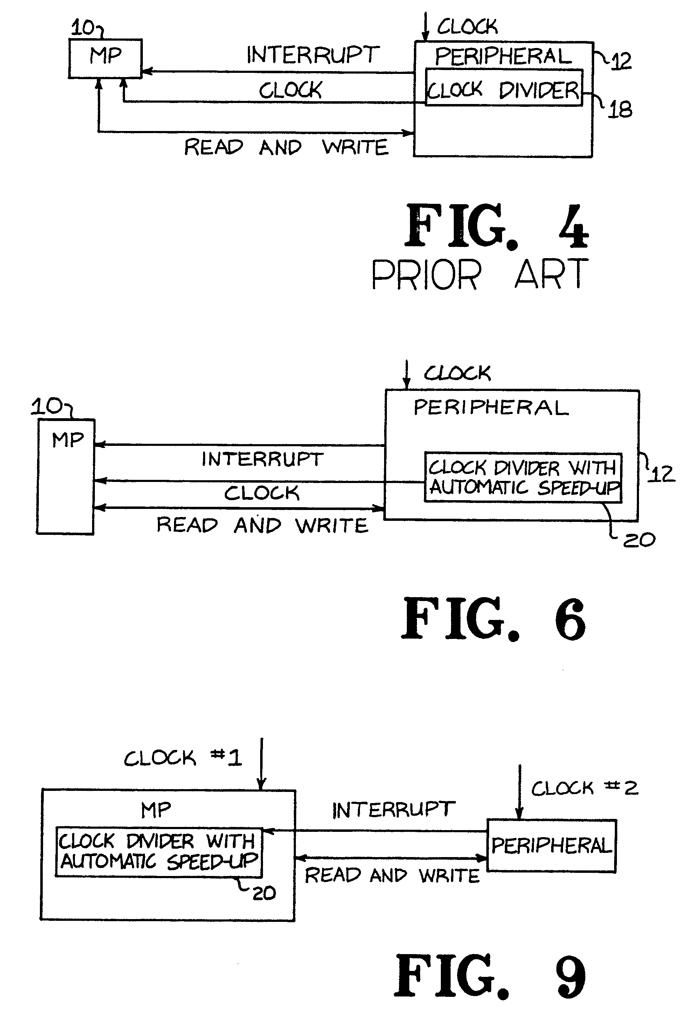

Figure 4 is a schematic diagram illustrating a microprocessor 10 and a peripheral device 12 which contains an internal clock generator. A clock signal for the microprocessor 10 comes from the peripheral device 12, which includes a clock divider 18 under the control of the microprocessor 10. Power consumption is reduced, but latency prevents the microprocessor 10 from a very low clock speed.

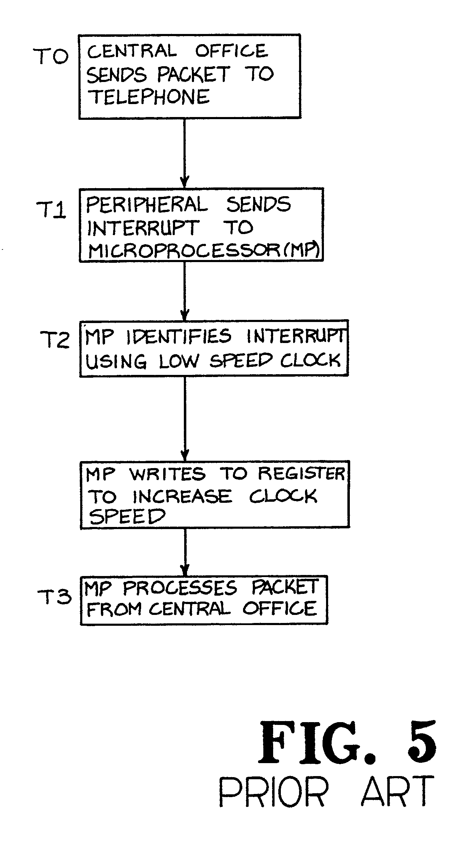

Figure 5 illustrates the approach of Figure 4 for servicing an interrupt from the peripheral device of a typical ISDN telephone, when receiving a phone call. A call set-up packet comprises bits of information and represents an incoming call, for example. Once a packet is sent at time TO over the D-channel, the telephone must be rung. However, the ringing of a telephone consumes much of the small amount of power specified for the telephone. To compensate for the consumption of power in ringing the telephone, the speed of a microprocessor clock in the telephone is decreased, because the consumption of power by the microprocessor decreases as its clock speed decreases. The microprocessor is not turned off, but decreased to a low speed that is sufficient for controlling the timing of a ringing signal and for responding in real-time to events occurring on the D-channel.

The peripheral device generates an interrupt to the microprocessor at time T1 on receipt of a packet from the central office. The microprocessor then begins at time T2 to service the interrupt with the low speed clock signal by performing an internal interrupt service routine, and identifying the reason for the interrupt. The microprocessor, after identifying the interrupt, writes to a register controlling the speed of the microprocessor clock and speeds up that clock to process the packet, for instance. The register for controlling the speed of the microprocessor clock can be located within the microprocessor or in the peripheral device.

The microprocessor clock of a telephone receiving a packet must increase to a high clock speed to process the packet. At time T3, the microprocessor begins to process a packet by reading data bytes from a buffer in the peripheral device. The time necessary for a microprocessor to respond to the interrupt limits how slow the microprocessor clock can run, and thus how much power consumption is conserved, because time is used in servicing the interrupt before the speed of the microprocessor clock can be increased.

Summary of the Invention

The invention concerns an apparatus comprising a means for producing a first clock signal having a first frequency, a processing means for receiving the first clock signal and processing data at the frequency of the first clock signal. The apparatus also comprises a means for producing an interrupt of the processing means, and a means for producing a second clock signal having a second frequency higher than the first clock signal, and sending the second clock signal to the processing means, such that the processing means services the interrupt at the frequency of the second clock signal.

In one embodiment, when a packet of data reaches a subscriber telephone from a central office switch, a peripheral device produces an interrupt to a microprocessor in the subscriber telephone and increases the speed of the clock signal to the microprocessor. The microprocessor uses the higher speed clock signal for fast servicing of the interrupt and reading of data bytes from receive registers in the peripheral device.

Brief Description of the Figures

Figure 1 is a schematic diagram illustrating a microprocessor and a peripheral device having fixed clock frequencies.

Figure 2 is a schematic diagram illustrating a microprocessor having an internal clock divider, and a peripheral device.

Figure 3 is a schematic diagram illustrating a microprocessor having a stopable clock, and a peripheral device.

Figure 4 is a schematic diagram illustrating a microprocessor and a peripheral device with an internal clock divider.

Figure 5 illustrates an approach using the device of Figure 4 for servicing an interrupt from the peripheral device.

Figure 6 is a schematic diagram illustrating this invention.

Figure 7 illustrates an approach according to this invention for faster servicing of an interrupt from a peripheral device.

Figure 8 illustrates the operation of a register for determining the speed of a microprocessor clock according to this invention.

Figure 9 is a schematic diagram of an alternative implementation of this invention.

Detailed Description of the Invention

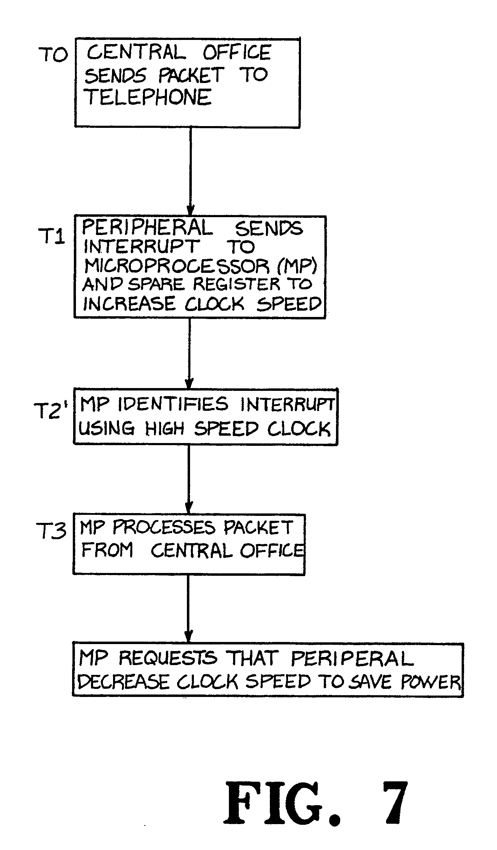

Figure 6 is a schematic diagram illustrating this invention. The microprocessor 10 receives an interrupt and a clock signal from the peripheral device 12 comprising an ISDN interface chip, such as the Am79C30A digital subscriber controller. The Am79C30A is a product of Advanced Micro Devices, the applicant of this patent. The microprocessor 10 reads and writes data to the peripheral 12. The peripheral 12 includes a clock divider 20, which is under the control of the peripheral device 12, as well as the microprocessor 10. When the peripheral device 12 detects an event requiring service, the peripheral device 12 automatically speeds up the clock signal to the microprocessor 10.

Figure 7 illustrates an approach according to this invention for faster servicing of an interrupt sent by the peripheral device to a microprocessor. According to this invention, a spare register controls the speed of a clock signal to the microprocessor.

The peripheral generates an interrupt to the microprocessor at time T1 when a packet arrives from the central office, for instance. The peripheral simultaneously increases the speed of the clock to the microprocessor. According to this invention, the microprocessor identifies the interrupt using the high speed clock signal, instead of the low speed clock signal of prior approaches. The microprocessor processes the packet at time T3 also using the high speed clock signal. The microprocessor then instructs the peripheral to reduce the clock to the lower frequency in order to conserve power.

In a specific embodiment, the spare register, comprises an 8-bit register that is programmed by the microprocessor and determines whether the microprocessor clock operates at low or high speeds. Upon resetting of the spare register the contents of this register are ignored by the microprocessor and the microprocessor clock defaults to operate at a high speed of 6.144 MHz to service an interrupt and then process a packet at time T3, for example. The spare register has no effect on the operation of the microprocessor until modifying data is written into the spare register.

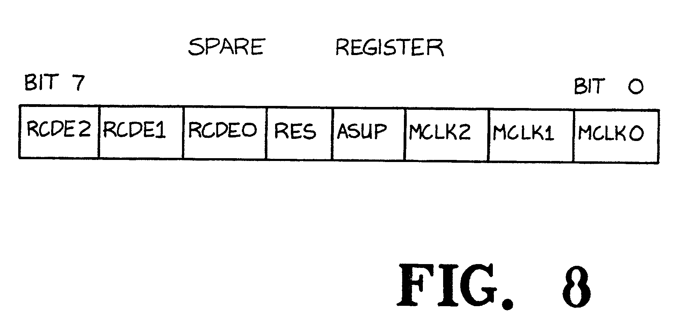

Figure 8 illustrates the spare register. The register can comprise a divider, buffer or other device for storing information. RCDE2, RCDE1, and RCDE0 are read-only bits. These read-only bits are set to 0,0,1 to represent a hardware revision code. RES is a reserved bit, which must be written to a logical 0. ASUP is an automatic speed-up enable bit. MCLK2-0 are used to set the slower clock frequencies. The microprocessor writes a word into the spare register to enable an automatic speed-up option according to this invention.

If the threshold of receive FIFO registers is exceeded in the digital subscriber controller, the controller sends an interrupt to the microprocessor and simultaneously sets the ASUP low to 0, which clears MCLK2-0. If the ASUP is low and the MCLK2-0 bits are cleared to 0,0,0, the spare register is ignored and the microprocessor clock defaults to the high speed clock signal. The microprocessor begins to service the interrupt by performing internal interrupt overhead and identifying the reason for the interrupt using the high speed clock signal. The microprocessor then processes the packet by reading data bytes from the receive FIFO registers using the high speed clock signal. The microprocessor determines when processing of the packet has been completed and then writes to the spare register to enable the speed-up option and select a low clock speed.

If the microprocessor sets the ASUP bit high to 1, the speed of the microprocessor clock is determined by the spare register and remains at one of several low speeds. The specific low speed of the clock is determined by the setting of bits MCLK2-0. If these bits are 0,0,1, a register controlling high speed clock signals is overridden and the microprocessor clock is set to 1.536 MHz, for example. If these bits are 0,1,0, that controlling register is overridden and the microprocessor clock is set to 768 KHz, for example. If these bits are 0,1,1, that controlling register is overridden and the microprocessor clock is set 384 KHz, for example. If the microprocessor clock is slowed to 384 KHz, for example, power consumed by the microprocessor and associated internal memory is reduced to 10 mW leaving 230 mW available for the digital subscriber controller. If MCLK2-0 bits are 1,0,0, the register controlling high speed modes is overridden and the microprocessor clock is stopped. Bit sequences 1,0,1; 1,1,0; and 1,1,1 are reserved for future use.

The microprocessor clock continues at one of the low speeds until the threshold of the receive FIFO registers in the digital subscriber controller have been reached and the digital subscriber controller again sets the ASUP of the spare register low. The low ASUP again clears the MCLK2-0 bits. The microprocessor clock again defaults to its high frequency to service the interrupt with the high speed clock signal. The microprocessor performs internal interrupt overhead and identifies the reason for the interrupt using the high speed clock signal.

Figure 9 is a schematic diagram of an alternative implementation the invention. A clock divider 20, which can be located in the microprocessor 10 and an interrupt input can be added to the microprocessor 10 to automatically increase the speed of the microprocessor clock. The microprocessor 10 receives a first clock signal from a quartz crystal oscillator (not shown), for instance. The peripheral device 12, comprising a digital subscriber controller, for instance, receives a second clock signal having a frequency of 12.288 MHz, for example. The peripheral device sends an interrupt to the clock divider, which automatically increases the speed of the clock signal within the microprocessor without performing any software operations.

The invention is not limited to a telephone system, though such an application has been described. The invention has other applications, such as motor contol systems, in which a peripheral device sends an interrupt to a microprocessor and determines the speed of the microprocessor.

**Claims**

1. An apparatus comprising:

a means for producing a first clock signal having a first frequency;
a processing means for receiving the first clock signal and processing data at the frequency of the first clock signal;
a means for producing an interrupt of the processing means; and
a means for producing a second clock signal having a second frequency higher than the first clock signal, and sending the second clock signal to the processing means;
wherein the processing means services the interrupt at the frequency of the second clock signal.

2. The apparatus of claim 1, wherein the means for producing the interrupt comprises a means for producing the second clock signal simultaneously with the interrupt.

3. The apparatus of claim 2, the means for producing a second clock signal comprising a means for storing data, the processing means also comprising a means for writing data to the means for storing.

4. The apparatus of claim 3, the means for producing an interrupt comprising an ISDN interface chip.

5. The apparatus of claim 4, the ISDN interface chip comprising at least one first-in-first-out register having a threshold, wherein the interface chip produces an interrupt to the processing means if the threshold has been exceeded.

6. The apparatus of claim 5, wherein the means for producing the second clock signal simultaneously with the interrupt is located in the processing means.

7. The apparatus of claim 6, the means for storing comprising a second register that enables the second clock signal.

8. The apparatus of claim 7, the second register comprising bits which the digital subscriber controller clears if the threshold of the first-in-first-out register has been exceeded, and which the microprocessor sets to determine the second frequency.

9. The apparatus of claim 5, wherein the means for producing the second clock signal simultaneously with the interrupt is located in the peripheral device.

10. The apparatus of claim 9, the means for storing comprising a second register that enables the second clock signal.

11. The apparatus of claim 10, the second register comprising bits which the digital subscriber controller clears if the threshold of the first-in-first-out register has been exceeded, and which the microprocessor sets to determine the second frequency.

EP 0 391 543 A2

FIXED CLOCK #1

MP

10

FIXED CLOCK #2

PERIPHERAL

12

READ AND WRITE

# FIG. 1
PRIOR ART

CLOCK #1

10

MP

INTERNAL CLOCK
DIVIDER

14

INTERRUPT

READ AND WRITE

CLOCK #2

PERIPHERAL

12

# FIG. 2
PRIOR ART

CLOCK #1

MP

CLOCK STOP

16

10

INTERRUPT

READ AND WRITE

CLOCK #2

PERIPHERAL

12

# FIG. 3
PRIOR ART

CLOCK

10

MP ← INTERRUPT ← PERIPHERAL 12

← CLOCK ← CLOCK DIVIDER 18

→ READ AND WRITE →

# FIG. 4
PRIOR ART

CLOCK

10

MP ← INTERRUPT ← PERIPHERAL

← CLOCK CLOCK DIVIDER WITH 12

AUTOMATIC SPEED-UP

→ READ AND WRITE →

20

# FIG. 6

CLOCK #1

CLOCK #2

MP INTERRUPT PERIPHERAL

CLOCK DIVIDER WITH
AUTOMATIC SPEED-UP

READ AND WRITE

20

# FIG. 9

```
TO  | CENTRAL OFFICE
    | SENDS PACKET TO
    | TELEPHONE
```

```
T1  | PERIPHERAL SENDS
    | INTERRUPT TO
    | MICROPROCESSOR (MP)
```

```
T2  | MP IDENTIFIES INTERRUPT
    | USING LOW SPEED CLOCK
```

```
    | MP WRITES TO REGISTER
    | TO INCREASE CLOCK
    | SPEED
```

```
T3  | MP PROCESSES PACKET
    | FROM CENTRAL OFFICE
```

# FIG. 5
## PRIOR ART

TO | CENTRAL OFFICE SENDS PACKET TO TELEPHONE

T1 | PERIPHERAL SENDS INTERRUPT TO MICROPROCESSOR (MP) AND SPARE REGISTER TO INCREASE CLOCK SPEED

T2' | MP IDENTIFIES INTERRUPT USING HIGH SPEED CLOCK

T3 | MP PROCESSES PACKET FROM CENTRAL OFFICE

MP REQUESTS THAT PERIPERAL DECREASE CLOCK SPEED TO SAVE POWER

# FIG. 7

SPARE    REGISTER

BIT 7                                                    BIT  O

| RCDE2 | RCDE1 | RCDEO | RES | ASUP | MCLK2 | MCLK1 | MCLKO |

# FIG. 8